(19) Europäisches Patentamt
European Patent Office
Office européen des brevets

(11) **EP 2 857 916 B1**

(12) **EUROPÄISCHE PATENTSCHRIFT**

(45) Veröffentlichungstag und Bekanntmachung des Hinweises auf die Patenterteilung:
**03.02.2016 Patentblatt 2016/05**

(51) Int Cl.:
**B64F 5/00** *(2006.01)*  **G05B 23/02** *(2006.01)*
**G01M 17/00** *(2006.01)*

(21) Anmeldenummer: **14184839.0**

(22) Anmeldetag: **15.09.2014**

(54) **Verfahren und Vorrichtung zum Detektieren eines Fehlers in einer Anordnung**

Method and device for detecting a fault in an assembly

Procédé et dispositif de détection d'une erreur dans un assemblage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.09.2013 DE 102013110151**

(43) Veröffentlichungstag der Anmeldung:
**08.04.2015 Patentblatt 2015/15**

(73) Patentinhaber: **Airbus Defence and Space GmbH 85521 Ottobrunn (DE)**

(72) Erfinder: **Stilkerich, Stephan 85521 Ottobrunn (DE)**

(74) Vertreter: **Flügel Preissner Kastel Schober Patentanwälte PartG mbB Nymphenburger Strasse 20a 80335 München (DE)**

(56) Entgegenhaltungen:
**DE-A1-102009 040 386    DE-A1-102011 108 678 US-A1- 2013 132 000**

**Beschreibung**

Die Erfindung betrifft ein Verfahren zum Detektieren, und insbesondere Behandeln, eines Fehlers in einer Anordnung, wobei die Anordnung durch wenigstens einen Parameter charakterisierbar ist. Die Anordnung ist vorzugsweise in einem technischen System angeordnet, das weiter vorzugsweise sich automatisch steuert und/oder unbemannt ist. Insbesondere ist die Anordnung in einem Flugkörper vorgesehen. Ferner betrifft die Erfindung eine Detektionsvorrichtung zum Detektieren, und insbesondere Behandeln, eines Fehlers in einer Anordnung. Darüber hinaus betrifft die Erfindung einen Flugkörper, der eine Anordnung und eine solche Detektionsvorrichtung umfasst.

Flugkörper, wie beispielsweise Flugzeuge, unbemannte Flugobjekte, Hubschrauber oder Satelliten, zeigen einen hohen Grad an Komplexität in ihrem Aufbau. Aufgrund dessen ist es oftmals nur schwer möglich, alle möglichen Fehler zu erkennen und/oder Gegenmaßnahmen einzuleiten. Dies betrifft insbesondere Fehler, die während der Entwicklung oder Routinetestungen des Flugkörpers nicht erkannt wurden oder erkannt werden können. Die Fehler können von vorübergehender als auch permanenter Natur sein. Insbesondere können sich solche Fehler auch über einen gewissen Zeitraum langsam aufbauen, so dass deren Detektion besonders schwer ist. Gerade bei automatisch kontrollierten Flugkörpern oder auch bei Flugkörpern, die nicht erreichbar sind, wie beispielsweise bei Satelliten, ist das automatische Erkennen und Behandeln von Fehlern besonders hilfreich. Dies wird auch oft als Selbstwahrnehmung (erkennen) bzw. Selbstausdruck (behandeln) bezeichnet.

US 2009/0229272 A1 beschreibt ein Verfahren zum Überwachen einer Antriebmaschine eines Luftfahrzeugs. In AT 202 384 B wird ein Verfahren zur Regelung eines Gütekennzeichens eines Erzeugnisses, wie beispielsweise dessen Abmessung, Gewicht oder Rauminhalt, beschrieben. DE 36 33 402 A1 offenbart ein Triebwerküberwachungssystem. Mit Hilfe dieses Systems lassen sich beispielsweise Temperatur, das Drehmoment und die Drehzahl eines Triebwerks überwachen. In US 6 408 259 B1 wird ein Verfahren zum Detektieren einer abnormalen Bedingung einer Luftfahrzeugturbine beschrieben.

US 2013/0132000 A1 beschreibt ein Verfahren zur Detektion eines Fehlers und zur Bestimmung der Ursache des Fehlers. Dazu werden bei einer Anordnung, die aus verschiedenen Komponenten aufgebaut ist, mittels Sensoren Parameter der Komponenten bestimmt. Die Parameter werden zeitlich erfasst und in Gruppen eingeteilt, welche mit der jeweiligen Komponente in Zusammenhang steht. In jeder dieser Gruppe wird bestimmt, ob die Parameter von einem Normwert abweichen.

DE 10 2011 108 678 A1 betrifft ein Verfahren zur Detektion von Fehlern und Anomalien in Wartungsreparaturdaten. Dazu werden Betriebsparameteridentifikatoren (PID) mittels verschiedener Sensoren und Diagnosesoftwareroutinen der verschiedenen Elemente eines Fahrzeugs bestimmt. In einer Trainingsphase werden bestimmte Cluster von PIDs bestimmt, in denen die Änderung einer PID mit der Änderung der anderen PIDs korreliert.

DE 10 2009 040 386 A1 betrifft ein Verfahren zur Zustands- und Prozessüberwachung eines technischen Systems. Die Überwachung erfolgt anhand mehrerer Prozessparameter des technischen Systems. Dazu wird der Wertebereich eines Prozessparameters in verschiedene Intervalle eingeteilt und bestimmt, in welches Intervall der gemessene Prozessparameter fällt.

Aufgabe der Erfindung ist es daher, ein System bereitzustellen, das Fehler eigenständig und zuverlässig erkennen kann.

Die Aufgabe wird durch das Verfahren nach Anspruch 1, die Vorrichtung nach Anspruch 6 und durch den Flugkörper nach Anspruch 11 gelöst.

Vorteilhafte Ausgestaltungen der Erfindung sind Gegenstand der abhängigen Ansprüche.

Das erfindungsgemäße Verfahren zum Detektieren eines Fehlers in einer Anordnung, insbesondere einer Anordnung eines Flugkörpers, umfasst die folgenden Schritte, wobei die Anordnung durch wenigstens einen Parameter charakterisierbar ist. In einem Schritt werden mehrere Werte des Parameters an mehreren Zeitpunkten und/oder an mehreren Messpunkten erfasst. Ein weiterer Schritt ist das Einteilen der Werte des Parameters in mehrere Gruppen und das Bestimmen der Anzahl der Werte in jeder Gruppe. Ferner wird eine Statistik mit der Anzahl der Werte der Gruppen gebildet, wobei die Anzahl der Werte über die Gruppen dargestellt wird. Darüber hinaus zeichnet sich das Verfahren durch die Schritte Vergleichen der gebildeten Statistik mit einer vorgegebenen Statistik mittels statistischer Methoden und Auslösen eines Fehlersignals, falls das Maß des statistischen Vergleichs einen vorgegebnen Wert übersteigt, aus.

Ein Fehler im Sinne der hier vorgestellten Erfindung ist jede Abweichung von einer normalen oder gewünschten Funktionsweise der Anordnung. Als Fehler kann auch ein solches Verhalten der Anordnung betrachtet werden, welches dem gewünschten Verhalten der Anordnung entgegenläuft, ohne dass dieses nicht gewünschte Verhalten von vornherein als Fehler oder Störung betrachtet wird. Fehler der Anordnung können zu einer Störung, einem Ausfall oder zur verminderten Leistung der Anordnung führen.

Die Anordnung kann in einem technischen System vorgesehen sein, das vorzugsweise automatisch arbeitet und/oder sich unbemannt bewegt. Beispielsweise kann die Anordnung in einem U-Boot oder auf nur schwer erreichbaren technischen Anlagen, wie zum Beispiel Off-shore-Plattformen, verwendet werden. Insbesondere findet die Anordnung in Flugkörpern Anwendung.

Ein Flugkörper im Sinne dieser Erfindung ist jedes technische System, das fliegen kann. Insbesondere sind darunter Flugzeuge, Hubschrauber, Drohnen oder andere unbemannte Flugobjekte zu verstehen. Zu Flugkörper sollen ferner auch Satelliten oder andere im Orbit kreisende Objekte gezählt werden. Insbesondere kann die Anordnung ein Steuerungssystem in der Luft- und Raumfahrt sein, wobei vorzugsweise dessen sicherheitskritische Funktionen/Threads (z.B. Flugregelung, Lageregelung, Navigation, Kabinendruck, ...) überwacht werden können.

Unter einer Anordnung eines Flugkörpers kann ein Bauteil, eine Gruppierung von Bauteilen, eine Steuerung eines oder mehrerer Bauteilen oder ein System des Flugkörpers verstanden werden. Die Anordnung kann aber auch den gesamten Flugkörper umfassen. Mit Hilfe des Parameters lässt sich der Zustand der Anordnung charakterisieren. Als Beispiel wäre hier zu nennen der Stromfluss, der in der Anordnung fließt, die Spannung, die in der Anordnung vorherrscht, oder die Temperatur, die in der Anordnung an verschiedenen Stellen vorherrscht. Beispielsweise lässt sich über die Temperaturmessung an verschiedenen Stellen des Flugkörpers bestimmen, ob das System, in diesem Beispiel eine Klimaanlage, korrekt arbeitet. Ferner lassen sich beispielsweise mit Hilfe von Temperaturmessungen auch die Funktionsfähigkeit eines Triebwerks charakterisieren, wobei hier die Anordnung durch das Triebwerk realisiert ist. Des Weiteren lässt sich beispielweise durch Temperaturmessung an und/oder in elektronischen Bauteilen die Funktionsfähigkeiten von Avionic Systemen charakterisieren, wobei hier die Anordnung durch das Avionic System gegeben ist.

Vorzugsweise können mittels des Verfahrens auch mehrere Parameter zur Charakterisierung des Bauteils verwendet werden. Die einzelnen Parameter und ihre Werte können zu einem Gesamtparameter, zusammengefasst werden.

In einem Schritt werden die Werte des Parameters erfasst. Im Falle des oben genannten Beispiels der Temperatur als Parameter würde hier die Temperatur bestimmt. Dies erfolgt insbesondere an mehreren Zeitpunkten, das heißt über eine gewisse Dauer, oder an mehreren verschiedenen Messpunkten, das heißt an verschiedenen Orten des Flugkörpers. Mehrere ist in diesem Zusammenhang als wenigstens zwei zu verstehen, wobei insbesondere viele Werte des Parameters bestimmt werden.

In einem weiteren Schritt werden die Werte des Parameters in mehrere Gruppen eingeteilt. Mehrere Gruppen kann in diesem Zusammenhang als zwei oder mehr verstanden werden, wobei vorzugsweise die Anzahl der Gruppen Y kleiner als die Anzahl der erfassten Werte X ist. Insbesondere ist Y wesentlich kleiner als X. Die Einteilung der Werte in die Gruppen erfolgt insbesondere anhand der Größe jedes Werts.

Nach der Einteilung der Werte in Gruppen, wird die Anzahl der einzelnen Werte in einer Gruppe bestimmt. Gerade, wenn die Anzahl der Werte X größer als die Anzahl der Werte Y ist, befinden sich in einer Gruppe mehrere Werte.

Der vorgegebene Anzahlbereich kann im Voraus durch Messung oder durch Simulation bestimmt werden. Durch die Verwendung eines Anzahlbereichs ist es möglich, Toleranzen bei der Bestimmung eines Fehlers mit zu berücksichtigen.

Das Fehlersignal kann ein Signal wie beispielsweise eine Warnleuchte, ein Warnhinweis oder ein Warnton sein. Unter dem Fehlersignal soll aber auch eine Reaktion verstanden werden, die den detektierten Fehler beheben oder zumindest verringern soll.

Vorzugsweise werden mehrere Gruppen mit einem jeweiligen Anzahlbereich verglichen, was den Vorteil hat, dass der Fehler besonders gut bestimmt werden kann. Durch die Wahl der Breite des Anzahlbereichs kann eine Sensitivität bei der Fehlerdetektion berücksichtigt werden.

Durch das erfindungsgemäße Verfahren wird der Flugkörper technisch auf Fehler hin untersucht. Das Auffinden oder das Nicht-Auffinden eines Fehlers, das heißt, das Auslösen des Fehlersignals, hat den technischen Effekt, dass eine objektive Beurteilung der Funktionsfähigkeit der Anordnung möglich ist, die automatisch und selbständig durchgeführt wird.

Am Beispiel Temperatur soll das erfindungsgemäße Verfahren beispielhaft erläutert werden. Die Temperatur dient hier als Parameter, um beispielsweise eine Klimaanlage des Flugkörpers zu überwachen. Dazu wird die Temperatur an mehreren Orten des Flugkörpers und zu verschiedenen Zeitpunkten des Flugs gemessen. Gerade im Sink- und Steilflug des Flugkörpers, bei dem sich in der Umgebung des Flugkörpers große Temperaturänderungen ergeben, kann es passieren, dass an einzelnen Punkten des Flugkörpers die Temperatur von einer vorgegebenen Temperatur abweicht. Durch eine herkömmliche Temperaturmessung an nur einem Punkt werden solche Abweichungen oftmals als Fehler erkannt. Bei dem erfindungsgemäßen Verfahren werden die an verschiedenen Zeitpunkten und Orten gemessenen Werte in verschiedene Gruppen eingeteilt. Jede Gruppe kann dabei einen Temperaturbereich umfassen. Daraus ergibt sich eine Temperaturverteilung (oder Temperaturstatistik genannt), die zum einen für die verschiedenen Flugphasen als auch für die Gesamtflugdauer des Flugkörpers charakteristisch ist. Um auf einen Fehler zu schließen, wird bei einer, mehreren oder bei allen Gruppen die Anzahl der vorgefundenen Werte mit einem Anzahlbereich verglichen. Dieser kann beispielsweise anhand einer Messung mit einer funktionsfähigen Klimaanlage bestimmt werden. Weicht die erfasste Verteilung von der vorher bestimmten ab, kann dies auf einen Fehler hindeuten.

An einem weiteren Beispiel Temperatur soll das erfindungsgemäße Verfahren beispielhaft erläutert werden. Die Temperatur dient hier als Parameter, um beispielsweise die Avionic-Bay und deren Funktionalitäten des Flugkörpers zu überwachen. Dazu wird die Temperatur an mehreren Orten der Avionik-Bay, an und/oder in mehreren elektronischen Bauteilen und zu verschiedenen Zeitpunkten des Flugs gemessen. Gerade in unterschiedlichen Phasen des Fluges/Mission des Flugkörpers ist die Temperatur an unterschiedlichen Orten der Avionic charakteristisch für eine korrekt arbeitende Avionic oder eine Avionic die womöglich fehlerhaft arbeitet. Bei dem erfindungsgemäßen Verfahren werden die an verschiedenen Zeitpunkten und Orten gemessenen Werte in verschiedene Gruppen eingeteilt. Jede Gruppe kann dabei einen Temperaturbereich umfassen. Daraus ergibt sich eine Temperaturverteilung (oder Temperaturstatistik genannt), die zum einen für die verschiedenen Flugphasen als auch für die Gesamtflugdauer des Flugkörpers charakteristisch ist. Um auf einen Fehler zu schließen, wird bei einer, mehreren oder bei allen Gruppen die Anzahl der vorgefundenen Werte mit einem Anzahlbereich verglichen. Dieser kann beispielsweise anhand einer Messung mit einer funktionsfähigen Avionic-Bay bestimmt werden. Weicht die erfasste Verteilung von der vorher bestimmten ab, kann dies auf einen Fehler hindeuten.

Das erfindungsgemäße Verfahren erlaubt es, Fehler sowohl in zeitlicher Hinsicht als auch in lokaler Hinsicht zu differenzieren.

Ein Vorteil des Verfahrens ist, dass es robust ist. Ein einzelner oder eine kleine Anzahl von falschen Werteeingaben, wie beispielsweise ein fehlerhafter Sensor zur Erfassung der Temperatur, zerstört nicht komplett die Wiedergabe des Systems, so dass trotz einzelner fehlerhafter Messungen kein Fehler angezeigt wird, wenn das System insgesamt korrekt funktioniert.

Ein weiterer Vorteil des Verfahrens ist, dass die Darstellung in zeitlicher Hinsicht angepasst werden kann. Dazu kann die Anzahl der Zeitpunkte (das heißt die Zeitdauer), bei denen Werte des Parameters erfasst werden, variiert werden, um somit bestimmte Zeitspannen auf Fehler hin zu untersuchen. Beispielsweise lässt sich mittels des Verfahrens durch Anpassen der Zeitpunkte, bei denen die Werte des Parameters erfasst werden, die Suche nach Fehlern während bestimmter Flugphasen richten. Alternativ kann auch der gesamte Flug zur Untersuchung auf Fehler verwendet werden.

Ferner können die Gruppen an einen erwarteten Fehler angepasst werden. Dies bedeutet, eine einzelne Gruppe kann so zugeschnitten werden, dass sie besonders signifikant auf einen Fehler hindeutet, falls die Anzahl der Werte von dem vorgegebenen Anzahlbereich abweicht.

Ferner ist es bei dem erfindungsgemäßen Verfahren vorzugsweise möglich, die gewählten Kriterien hinsichtlich der Gruppe und die Erfassung der Werte des Parameters auch während des Betriebs der Anordnung zu ändern, so dass das Verfahren dazu verwendet werden kann, die Anordnung auf unterschiedliche Fehler hin zu untersuchen.

Vorzugsweise ist das Verfahren mathematisch solide, so dass eine mathematische Darstellung des Fehlers möglich ist, was eine Weiterverarbeitung mit Hilfe von statistischen Methoden und Werkzeugen ermöglicht.

Weiter vorzugsweise kann das Verfahren durch eine Datenverarbeitungsanlage verarbeitet werden, da die erfassten Werte der Parameter mit Hilfe des Verfahrens so aufbereitet werden, dass sie maschinenlesbar sind. Bevorzugt bietet das Verfahren ferner die Möglichkeit, die Ergebnisse der einzelnen Schritte in einer solchen Weise darzustellen, dass sie leicht von einem Schritt zum anderen übertragen werden können.

Vorzugsweise werden bei dem Verfahren die Werte mehrerer Parameter erfasst. Dadurch kann die Detektion eines Fehlers sicherer werden, da das Fehlersignal im Hinblick auf einen Parameter mit dem Ergebnis eines anderen Parameters verglichen werden kann. Beispielsweise wird ein Signal für einen Fehler nur dann ausgelöst, wenn wenigstens zwei Fehlersignale, die für zwei verschiedene Parameter bestimmt wurden, ausgelöst wurden.

Es ist bevorzugt, dass der Parameter eine physikalische Größe ist, die vorzugsweise mittels einer Messung erfasst wird. Es ist ferner bevorzugt, dass der Parameter eine Arbeitsgröße einer Steuereinrichtung der Anordnung ist, wobei vorzugsweise die Arbeitsgröße durch Messung der Steuereinrichtung erfasst wird.

Unter einer physikalischen Größe kann jede Größe verstanden werden, die durch eine technische Einrichtung beispielsweise im Rahmen einer Messung erfasst werden kann. Die Messung kann dabei von technischer Natur sein.

Unter einer physikalischen Größe kann auch eine externe Störung der Anordnung verstanden werden. Eine externe Störung ist beispielsweise das Auftreffen eines hochenergetischen Teilchens auf die Anordnung. Dies kann bei Satelliten oder bei kleinen Halbleiterbauteilen vorkommen. Der Sensor für eine solche Messung kann beispielsweise ein verteilter Speicher sein. Ein Muster wird dazu in dem Speicher abgelegt, das vorzugsweise von festverdrahteten Schaltkreisen erzeugt wird. Das Muster wird insbesondere mit einer Checksumme versehen, die nach einer gewissen Zeit überprüft werden kann. Eine Abweichung kann als das Auftreffen eines hochenergetischen Teilchens gewertet werden. Dies ist ein Beispiel für eine Messung. Die Einteilung in eine Gruppe entspricht in diesem Beispiel, wo die Teilchen auftreffen, beispielsweise in welcher Region des Speichers. Die Anzahl der aufgetroffenen Teilchen pro Region kann dann mit einem Anzahlbereich verglichen werden, um so auf eine Störung schließen zu können.

Unter einer Steuereinrichtung können all jene Vorrichtungen oder Bauteile verstanden werden, mittels welcher die Anordnung gesteuert werden kann. Ist die Anordnung beispielsweise eine Klimaanlage, ist die Steuereinrichtung das Bauteil der Klimaanlage, das die Klimaanlage steuert. Unter Arbeitsgröße können all jene Variablen verstanden werden, mittels welcher sich die Tätigkeit der Steuereinrichtung charakterisieren lassen. Die Steuereinrichtung kann beispielsweise eine Datenverarbeitungsanlage wie ein Rechner, Prozessor oder dergleichen sein.

Eine Datenverarbeitungsanlage kann auch aus mehreren Computer-Boards aufgebaut sein, die mit einer oder mehreren CPUs (beispielsweise PowerPC Prozessoren) bestückt sind, Speicher, FPAGs, Schnittstellen und BUS-Systemen. Diese Subsysteme können in größeren Systemen zusammengefasst werden und repräsentieren beispielsweise die Gesamtavionik des Flugkörpers. Zum Beispiel können damit die Werte für Temperatur und Spannung auf unterschiedlichen System-Ebenen erfasst werden. Beispielsweise können die Temperatur- und Spannungswerte für einzelne Subsysteme, die mehrere Boards umfassen, bestimmt werden und zum anderen sehr lokal für einzelne Komponenten (CPU, FPGA, ...) erfasst werden. Je lokaler die Erfassung von typischen Werten (Temperatur, Spannung, "Thread"-Run-Time, "Thread"-Memory) ist, desto lokaler und präziser kann die Fehlerlokalisation im System sein.

Es ist bevorzugt, dass der Parameter eine Temperatur in und/oder an der Anordnung und/oder eine Geschwindigkeit, insbesondere eines Triebwerks des Flugkörpers, und/oder eine Spannung in und/oder an der Anordnung umfasst.

Die Temperatur kann an einem Triebwerk oder in dem Flugkörper gemessen werden. Die Geschwindigkeit kann beispielsweise die Drehgeschwindigkeit des Triebwerks des Flugkörpers sein. Unter der Anordnung kann auch das elektrische Versorgungssystem des Flugkörpers verstanden werden, so dass dieses anhand der Spannung charakterisierbar ist.

Es ist bevorzugt, dass die Arbeitsgröße die Dauer eines Prozesses der Steuereinrichtung und/oder den von der Steuereinrichtung verwendete Speicher und/oder den in der Steuereinrichtung ablaufenden Datenverkehr umfasst.

Unter der Dauer eines Prozesses kann die Zeitspanne verstanden werden, die ein Prozess, der in der Steuereinrichtung abläuft, benötigt. Ein Beispiel für einen Prozess ist ein Thread. Ändert sich die Dauer des Prozesses (auch Ausführungszeit genannt), indem er weniger Zeit oder mehr Zeit als erwartet benötigt, ist dies ein Indiz auf einen Fehler. Durch Erfassung der Dauer des Prozesses kann somit auf die korrekte Funktion der Steuereinrichtung geschlossen werden.

Wird die Steuereinrichtung durch eine Datenverarbeitungsanlage bereitgestellt, kann der von der Steuereinrichtung verwendete Speicher ein Indiz darauf sein, dass die Steuereinrichtung richtig arbeitet. Dies kann zum einen der Arbeitsspeicher der Steuereinrichtung als auch der Umfang der von der Steuereinrichtung abgelegten Daten in dem Speicher sein.

Die Steuereinrichtung kann beispielsweise als ein Netzwerk ausgestaltet sein. Der darin abgelaufene Datenverkehr kann auch als ein Parameter verwendet werden, um die Steuereinrichtung und damit die Anordnung zu charakterisieren. Auch der Datenverkehr innerhalb einer Datenverarbeitungsanlage kann als Parameter für die Charakterisierung verwendet werden.

Es ist bevorzugt, dass das Kriterium für die Einteilung in die Gruppe wenigstens einer Gruppe sich von dem Kriterium einer anderen Gruppe unterscheidet, wobei weiter vorzugsweise das Kriterium für die Einteilung wenigstens einer Gruppe durch einen Wertebereich bestimmt wird, der mit einem Fehler der Anordnung im Zusammenhang steht.

Insbesondere, wenn eine Vielzahl von Werten erfasst wird, die in eine Mehrzahl von Gruppen eingeteilt wird, ist es bevorzugt, dies als eine Statistik darzustellen, wobei die Anzahl der Werte über die Gruppen dargestellt wird. Insbesondere ist dies eine diskrete Wahrscheinlichkeitsverteilung oder Statistik.

Bei der Wahl der einzelnen Gruppen, das heißt der Bereich, in dem die Werte eines Parameters einer Gruppe zugeordnet werden, kann der zu erwartende Fehler berücksichtigt werden. Im Fall der oben beschriebenen Temperaturmessung kann beispielsweise ein Temperaturbereich, der besonders sensibel Fehler anzeigt, dazu verwendet werden, dies als eigene Gruppe zu definieren, so dass Änderungen in dieser Gruppe bei der Beurteilung, ob ein Fehler vorliegt, besonders berücksichtigt werden. Dies kann beispielsweise dadurch realisiert werden, dass, wenn alle Gruppen die gleiche Breite, zum Beispiel einen Wertebereich von 5°C haben, eine Gruppe in zwei Untergruppen aufgeteilt wird. Diese Untergruppen können dann beispielsweise 2°C und 3°C umfassen.

Der vorgegebene Anzahlbereich kann beispielsweise eine Statistik sein, die bei einer fehlerfreien Anordnung ermittelt wurde. Die beiden Statistiken lassen sich dann mittels statistischer Methoden oder Werkzeuge analysieren. Als Beispiel sei hier die Kullback-Leibler-Divergenz, der CHI-Quadrattest, genannt. Wenn das Maß dieses statistischen Vergleichs einen gewissen Wert übersteigt, kann dies auf einen Fehler hindeuten. In diesem Sinne kann der vorgegebene Anzahlbereich auch als eine Statistik verstanden werden, wobei das Maß der Abweichung einen Toleranzbereich festlegt.

Ein weiterer Aspekt der Erfindung ist das Vorsehen einer Detektionsvorrichtung zum Detektieren eines Fehlers in einer Anordnung, insbesondere einer Anordnung eines Flugkörpers, wobei die Anordnung durch wenigstens einen Parameter charakterisierbar ist. Die Detektionsvorrichtung umfasst eine Messeinrichtung, eine Analyseeinrichtung und eine Warneinrichtung. Die Messeinrichtung ist geeignet, mehrere Werte des Parameters der Anordnung an mehreren Zeitpunkten und/oder an mehreren Messpunkten zu erfassen. Die Analyseeinrichtung teilt die Werte des Parameters in mehrere Gruppen ein, bestimmt die Anzahl der Werte in jeder Gruppe und bildet aus den erfassten Werten eine Statistik, wobei die Anzahl der Werte über die Gruppen dargestellt ist. Die Warneinrichtung vergleicht die gebildete Statistik mit einer vorgegebenen Statistik mittels statistischer Methoden und löst ein Signal aus, falls das Maß des statistischen Vergleichs einen vorgegebnen Wert übersteigt.

Im Hinblick auf die Detektionsvorrichtung gelten die im Zusammenhang mit dem Verfahren gemachten Überlegungen und Vorteile.

Die Detektionsvorrichtung kann für eine Anordnung in einem technischen System vorgesehen sein, das vorzugsweise automatisch arbeitet und/oder sich unbemannt bewegt. Beispielsweise kann die Anordnung in einem U-Boot oder auf nur schwer erreichbaren technischen Anlagen, wie zum Beispiel Off-shore-Plattformen, verwendet werden. Insbesondere findet die Detektionsvorrichtung in Flugkörpern Anwendung.

Die Detektionsvorrichtung kann mittels der technischen Messeinrichtung die Werte eines oder mehrerer Parameter der Anordnung bestimmen. Die Analyseeinrichtung teilt diese Werte in Gruppen ein und bestimmt die Anzahl der Werte in einer Gruppe. Die Warneinrichtung löst das Fehlersignal aus, so dass der technische Effekt erzielt werden kann, einen Fehler in der Anordnung automatisch und selbständig zu bestimmen und insbesondere zu behandeln.

Es ist bevorzugt, dass der Parameter eine physikalische Größe ist, die vorzugsweise mittels wenigstens eines Sensors der Messeinrichtung erfassbar ist, und/oder dass der Parameter eine Arbeitsgröße einer Steuereinrichtung der Anordnung ist, wobei vorzugsweise die Arbeitsgröße durch eine Überwachungseinrichtung erfassbar ist.

Im Hinblick auf die physikalische Größe und die Arbeitsgröße gelten die oben dargelegten Bemerkungen. Der Sensor bestimmt die Temperatur vorzugsweise an mehreren Zeitpunkten. Insbesondere ist eine Mehrzahl von Sensoren in der Anordnung gegeben, um die Anordnung besonders gut charakterisieren zu können. Die Überwachungseinrichtung kann in der Steuereinrichtung als räumlich körperliche Ausgestaltung vorgesehen sein, um die Arbeitsgröße der Steuereinrichtung zu erfassen. Alternativ kann die Überwachungseinrichtung auch als eine Software ausgestaltet sein, um die Arbeitsgröße der Steuereinrichtung zu erfassen.

Es ist bevorzugt, dass der Sensor geeignet ist, eine Temperatur in und/oder an der Anordnung und/oder eine Geschwindigkeit, insbesondere eines Triebwerks des Flugkörpers, und/oder eine Spannung in und/oder an der Anordnung zu messen.

Es ist bevorzugt, dass die Messeinrichtung geeignet ist, die Dauer eines Prozesses der Steuereinrichtung und/oder der von der Steuereinrichtung verwendete Speicher und/oder der in der Steuereinrichtung ablaufende Datenverkehr zu erfassen.

Auch hier gelten die oben ausgeführten Überlegungen.

Es ist bevorzugt, dass als Kriterium für die Einteilung in eine Gruppe wenigstens einer Gruppe sich von dem Kriterium einer anderen Gruppe unterscheidet, wobei weiter vorzugsweise das Kriterium für die Einteilung wenigstens einer Gruppe durch den Wertebereich bestimmt wird, der mit einem Fehler der Anordnung im Zusammenhang steht.

Die Analyseeinrichtung kann als eine elektrische Schaltung ausgebildet sein, die je nach Größe des erfassten Parameters einen Zähler einer Gruppe um 1 erhöht. Alternativ kann die Analyseeinrichtung auch als Software ausgestaltet sein.

Insbesondere verwendet die Analyseeinrichtung die oben genannten statistischen Methoden.

Ferner stellt die Erfindung einen Flugkörper bereit, der eine Anordnung und eine Detektionsvorrichtung zum Detektieren eines Fehlers in einer Anordnung, so wie sie oben beschrieben wurde, umfasst.

Der Flugkörper ist insbesondere ein unbemanntes und/oder automatisch technisches System. Alternativ kann der Flugkörper ein Luftfahrzeug wie beispielsweise ein Flugzeug oder Hubschrauber sein. Im Folgenden wird die Erfindung anhand von Ausführungsbeispielen näher charakterisiert. In den schematischen Zeichnungen zeigen

Fig. 1        einen Flugkörper mit einer Anordnung in einer ersten Ausführungsform;

Fig. 2        einen Flugkörper mit einer Anordnung nach einer zweiten Ausführungsform;

Fig. 3        in Blockdiagramm, das eine Ausführungsform des Verfahrens schematisch darstellt;

Fig. 4        Skizzen von diskreten Wahrscheinlichkeitsverteilungen;

Fig. 5a, 5b        Beispiele unterschiedlicher Binnigs mit normalisierten Daten, wobei in Fig. 5a sieben Binning-Bereiche und in Fig. 5b sechs Binning-Bereiche verwendet werden;

Fig. 6a, 6b        Beispiele von unterschiedlichen Samplinggrößen, die nicht normalisiert sind, wobei in Fig. 6a 100 Messungen und in Fig. 6b 10 Messungen verwendet wurden;

Fig. 7        ein Beispiel eines homogenen Binnings mit großer Samplingnummer, das ein typisches Profil einer Region mit hoher Aktivität (hoher Temperatur) gefolgt durch niedrige Aktivität (niedrige Temperatur) und des Abkühlens und des Wiederstartens zeigt;

Fig. 8        ein Beispiel einer Anordnung, um einzelne Ereignisstörungen zu detektieren, wobei die Punkte Speicherkomponenten/Regionen mit vorgegebenem Muster und einem Korrekturcode, um Fehler zu identifizieren, zeigen, wobei die Definition der Regionen mit den Gruppen der Verteilung übereinstimmt;

Fig. 9      ein Beispiel einer Einzel-Ereignisstörungmessungsverteilung, wobei die Aktivität in Regionen 1, 3 und 4 vorliegt, jedoch nicht in Region 5, die als Einzel-Ereignisstörung sicher identifiziert wird;

Fig. 10     eine Ausführungszeitverteilung eines einfachen Steueralgorithmus für eine Satellitenanwendung;

Fig. 11     ein Beispiel einer Flat-Ausführungszeitverteilung, die drei Moden der Ausführungszeiten zeigt, die typisch für drei Ausführungspfade in dem Thread (zum Beispiel Fallstatements) sind; und

Fig. 12     eine grafische schematische Darstellung eines Szenarios.

Das Verfahren dient der Überwachung einer Anordnung 14, die in einem komplexen technischen System vorgesehen ist. Mit Hilfe des Verfahrens wird die Anordnung 14 auf Fehler überprüft. Dies geschieht automatisch. Das Überwachungsverfahren ist dabei mittels einer Detektionsvorrichtung 16 realisiert. Das komplexe technische System ist in dem Ausführungsbeispiel ein Flugkörper 10.

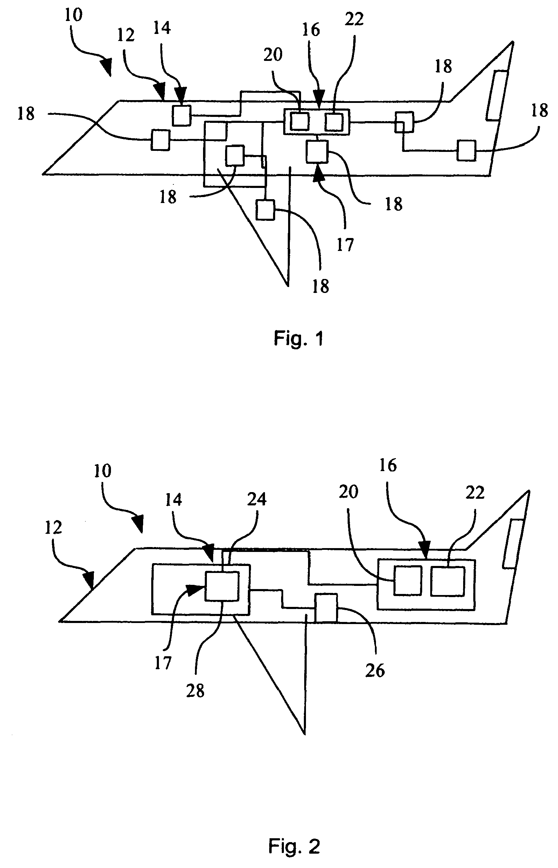

In Fig. 1 ist der Flugkörper 10 als ein Flugzeug 12 dargestellt. Das Flugzeug 12 hat die Anordnung 14, die in dem gezeigten Beispiel eine Klimaanlage ist. Die Klimaanlage steuert die Temperatur in dem Flugzeug 12. Ferner ist in dem Flugzeug 12 die Detektionsvorrichtung 16 vorgesehen, die eine Messeinrichtung 17 aufweist. Die Messeinrichtung 17 wird durch mehrere Sensoren 18 bereitgestellt, die die Temperatur in dem Flugzeug 12 an verschiedenen Stellen und an verschiedenen Zeitpunkten messen. Der Parameter ist hier die Temperatur und der Wert des Parameters die tatsächlich gemessene Temperatur.

Die Detektionsvorrichtung 16 hat ferner eine Analyseeinrichtung 20 und eine Warneinrichtung 22. Die Analyseeinrichtung 20 verarbeitet die Temperaturwerte und liefert das Ergebnis an die Warneinrichtung 22. Die Warneinrichtung gibt beim Vorliegen eines Fehlers ein Fehlersignal aus und/oder behandelt den Fehler.

In Fig. 2 hat die Anordnung 14 eine Steuereinrichtung 24. Die Steuereinrichtung 24 steuert ein Bauteil 26 des Flugzeugs 12. In der Steuereinrichtung 24 ist eine Überwachungseinrichtung 28 angeordnet, die Parameter der Steuereinrichtung 24 erfasst.

Die Messeinrichtung 17 wird, wie in Fig. 2 dargestellt, durch die Überwachungseinrichtung 28 bereitgestellt. Die Überwachungseinrichtung 28 ist mit der Analyseeinrichtung 20 und der Warneinrichtung 26 verbunden.

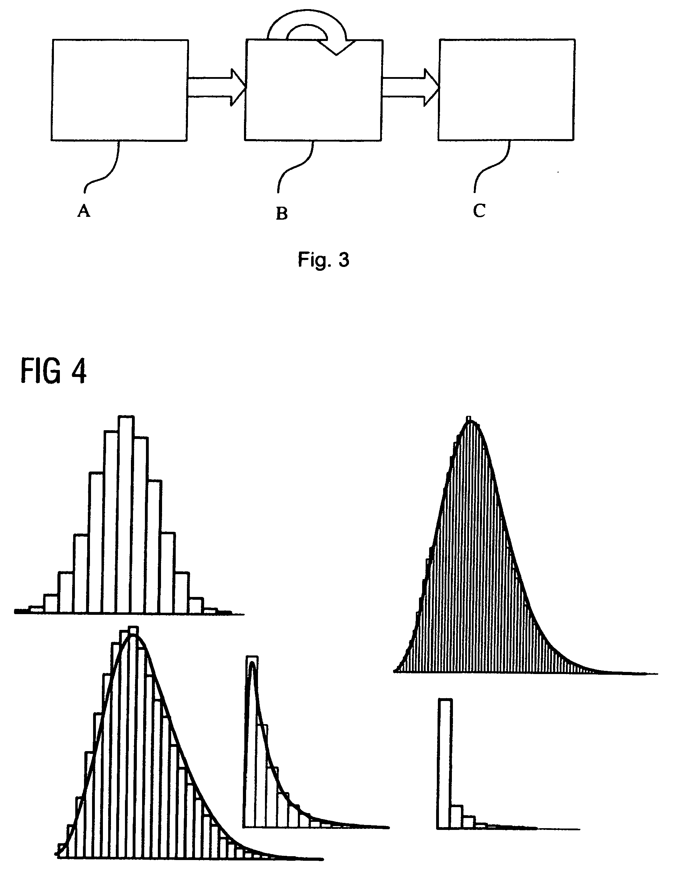

Das in Fig. 3 gezeigte Blockdiagramm stellt schematisch den Ablauf des Überwachungsverfahrens dar, das mit Hilfe der Detektionsvorrichtung 16 realisiert ist. In Stufe A werden die Werte des Parameters oder der Parameter erfasst, in Gruppen eingeteilt und die Anzahl der Werte in den einzelnen Gruppen bestimmt. Dies führt zu diskreten Wahrscheinlichkeitsverteilungen des Parameters oder der Parameter. In Stufe B, der auch als Selbstwahrnehmungs-Schritt bezeichnet wird, wird dann die Anzahl der Werte wenigstens einer Gruppe mit einem Anzahlbereich verglichen und/oder statistische Vergleichsmaße bestimmt. Die Ergebnisse dieser Auswertung werden in einem Feature-Vektor abgelegt. Über eine Schleife wird noch eine zeitliche Komponente in das System eingeführt. In Stufe C, der auch als Selbstausdrucks-Schritt bezeichnet wird, wird dann der Feature Vector ausgewertet. Falls Werte des Feature-Vectors außerhalb eines definierten Bereiches liegen, wird ein Fehlersignal ausgelöst und/oder der Fehler behandelt.

Im Folgenden wird das Verfahren anhand der in Fig. 3 gezeigten Stufen eingehend beschrieben.

Um die herkömmlichen und ressourcenintensiven Fehlertoleranzkonzepte zum Weiterverarbeiten von Strukturen sowie für Kommunikations-/Netzwerkstrukturen zu bewältigen, werden Systemmerkmale der Selbstwahrnehmung und des Selbstausdruckes ausgenutzt, um Alternativen für Fehlertoleranzen vorzuschlagen. Im Detail wird ein Ansatz eingeführt, der das Abarbeiten von miteinander verbundenen Fehlertoleranzen auf dem Threadniveau und kommunikations/netzwerkbezogene Fehlertoleranzen mittels des Bereitstellens von alternativen Routingwegen durch das Netzwerk bereitstellt; alle Entscheidungen und Wirkungen werden von der Selbstwahrnehmung und des Selbstausdruckes abgeleitet.

Um die Merkmale der Selbstwahrnehmung und des Selbstausdruckes - die Fähigkeit des Systems oder der Anordnung 14, seinen eigenen Status, seine Entitäten, Kapazitäten und Verbindungen mit anderen Einheiten/Knoten zu kennen, um nur wenige spezifische Fähigkeiten zu nennen und um autonom (Gegen-)Reaktionen auszulösen - in technischen Berechnungssystemen zu realisieren, wird ein Dreistufenmodell vorgeschlagen, das in Abbildung 3 schematisch dargestellt ist.

In Stufe A werden unterschiedliche physikalische Systemparameter oder jede Art von Systemstatistiken gesammelt und vorverarbeitet. Zusätzlich wird eine gemeinsame Darstellung (diskrete Wahrscheinlichkeitsverteilung) mit speziellen Merkmalen verwendet. Weitere Einzelheiten über die gemeinsame Darstellung mittels diskreter Wahrscheinlichkeitsfunktionen werden weiter unten angegeben.

Im Stufe B wird ein Merkmalsvektor auf Grundlage der Daten gebildet, die in Stufe A gesammelt und vorverarbeitet wurden. Zusätzlich können die Informationen des Merkmalsvektors selbst zur Verarbeitung in Stufe B verwendet werden. Dies bietet die Möglichkeit, ein Gedächtnis in diesem Schritt über die Merkmale des Systems aufzubauen.

Schließlich werden in Stufe C entsprechende System(gegen)aktionen und Änderungsszenarien berechnet und schließlich realisiert, um den Fehler zu behandeln

Dreistufenmodell

Wie bereits oben beschrieben, wird ein Dreistufenmodell vorgeschlagen, um die Selbstwahrnehmung und den Selbstausdruck bei technischen Systemen in die Praxis umzusetzen. Eine Gestaltungsentscheidung ist die Identifikation von geeigneten Systemeigenschaften und Systemstatistiken sowie das Verarbeiten und die robuste Darstellung dieser Größen (Stufe A), um die Selbstwahrnehmung (Stufe B) zu bilden. Es wurde entschieden, die Systemeigenschaften und die Systemstatistiken durch diskrete Wahrscheinlichkeitsverteilungen darzustellen und Wahrscheinlichkeitsmaße und statistischen Werkzeuge zu verwenden, um robuste Merkmalsvektoren, die die Systemselbstwahrnehmung darstellen, zu bilden. Die Konfiguration der Wahrscheinlichkeitsverteilungen wird in Stufe A stattfinden, wohingegen die Berechnung und das Bilden der Merkmalsvektoren als zentrale Aktivität, um die Systemselbstwahrnehmung zu bilden, in Stufe B stattfinden werden. Zusätzlich wird in Stufe A a-priori-Kenntnisse des Systems und der Umgebung als eine Art grundlegende und allgemeine Erfahrung des Systems verwenden, um die Selbsterkenntnisschaffung zu steuern und einzuschränken. Schließlich wird in Stufe C der Selbstausdruck und folglich die entsprechenden Aktionen, Signale und Änderungsstrategien berechnet, um aufkommende, vorübergehende oder permanente Fehler zu handhaben.

Stufe A

Zuerst werden Merkmale des Systems, die für das konkrete System und das Anwendungsszenario relevant sind, identifiziert und die entsprechenden Daten gesammelt. Im Prinzip kann man die folgenden drei Kategorien von Systemmerkmalen unterscheiden:

1. Physikalische Größen des Systems, die durch verschiedene Sensoren gemessen werden, zum Beispiel Temperatur, Spannung, Triebswerkgeschwindigkeit, netzwerkbezogene Merkmale usw.

2. Statistiken des Systems, die während des Betriebs gesammelt und berechnet werden, einschließlich Informationen über die Threads, Prozesse, die Verarbeitungszeit, die Speicherverwendung, den Netzwerkverkehr, usw.

3. Vorgegebene Größen des Systems und Arbeitsbedingungen, die A-priori bereitgestellt werden und daher A-priori-Wissen darstellen.

Informationsdarstellung

Eine kritische Gestaltungsentscheidung ist die Darstellung aller gesammelten Systeminformationen, wie sie zuvor beschrieben wurden, die von unterschiedlichen Sensoren mit unterschiedlichen Charakteristiken, Laufzeitstatistiken der verschiedenen Systeme oder sogar A-priori-Wissen des Systems selbst oder dessen Umgebung kommen können.
Daher wird eine mathematische Darstellung benötigt, die simultan die folgenden elementaren Merkmale anbietet:

1. Robustheit - eine einzige oder eine kleine Anzahl von falschen Dateneingaben soll nicht die Darstellung komplett zerstören.

2. Anpassbarkeit der Darstellung und variierende Auflösung

a) im Hinblick auf die Zeit - verschiedene Zeitdauern zum Sammeln der Daten und daher die Menge der Daten, die in die Darstellung eingeht

b) Details - Mapping von Wertebereichen zu diskreten Werten (Binning), einschließlich nicht homogener Wertebereiche; diese werden auch als Gruppen bezeichnet

c) während des Arbeitsablaufs - Ändern der zuvor genannten Merkmale während des Arbeitsablaufs.

3. Mathematisch solide

a) systematisch mathematische fundierte Darstellung
b) Werkzeug, das für die weitere Verarbeitung und Analyse eingestellt ist (Stufe B und Stufe C)

4. Die Darstellung muss durch digitale Computer effizient verarbeitbar sein

5. Schnittstellen - gut definierte Schnittstellen zwischen Stufe B und Stufe C.

Diskrete Wahrscheinlichkeitsverteilungen, wie sie in Fig. 4 beispielhaft dargestellt sind, sind geeignet und wurden daher für diesen Ansatz ausgewählt, um flexibel, robust und systematisch alle gesammelten Daten für den Selbstwahrnehmungs-schritt und den folgenden Selbstlausdrucksschritt darzustellen. Offensichtlich ist ein einziges Datum ein Spezialfall und nicht von dieser Diskussion ausgeschlossen.

Beispielhafte Systemmerkmale

In der ersten Kategorie - physikalische Größen des Systems, gemessen durch verschiedene Sensoren - werden die folgenden Merkmale als Beispiel für eine physikalische Größe erwähnt:

1. Temperaturmessungen: Dieses Merkmal dient als ein starker Indikator des Gesamtsystemstatus und zeigt bei verschiedenen Raumskalen (Subsystem, Baugruppe und Komponente), Zeit (Samplinganzahl) und Auflösung (Gruppeneinteilung oder Bereiche für das Binning) Überlastsituationen oder Probleme mit der Kühlung an. Spezifische Temperatursituationen können sich allmählich in einen nicht normalen Systemzustand entwickeln oder schon einen nicht normalen Systemzustand mit einer Systemfehlfunktion andeuten.

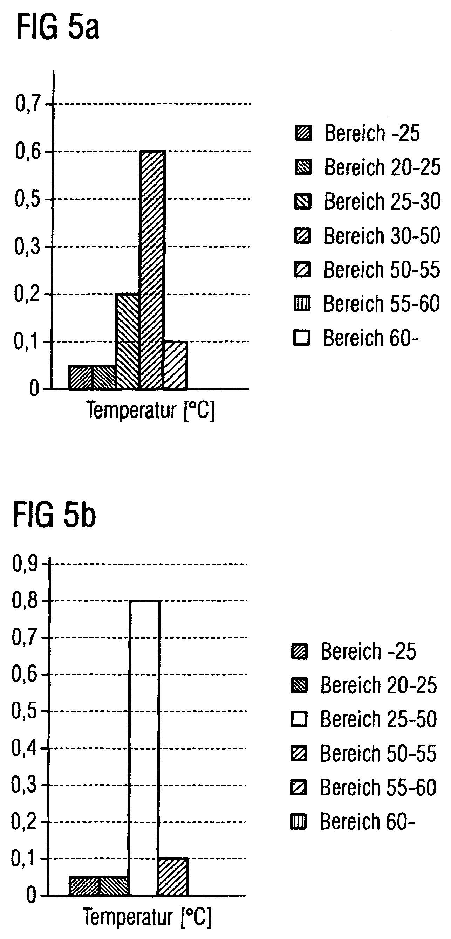

Fig. 5 zeigt Beispiele von diskreten Wahrscheinlichkeitsverteilungen mit unterschiedlicher Anzahl von Bins (oder Gruppe), die den Bereich der möglichen Werte abdecken. Fig. 5 (links) besitzt zwei Bins, einen für die Temperaturwerte von 25°C bis 30°C und einen für die Temperaturwerte von 30°C bis 50°C. In Fig. 5 (rechts) ist der Temperaturbereich von 25°C bis 50°C in einen einzigen Bin kombiniert und daher wird dieser Peak der Verteilung dominanter, während die Randbereiche verschwinden.

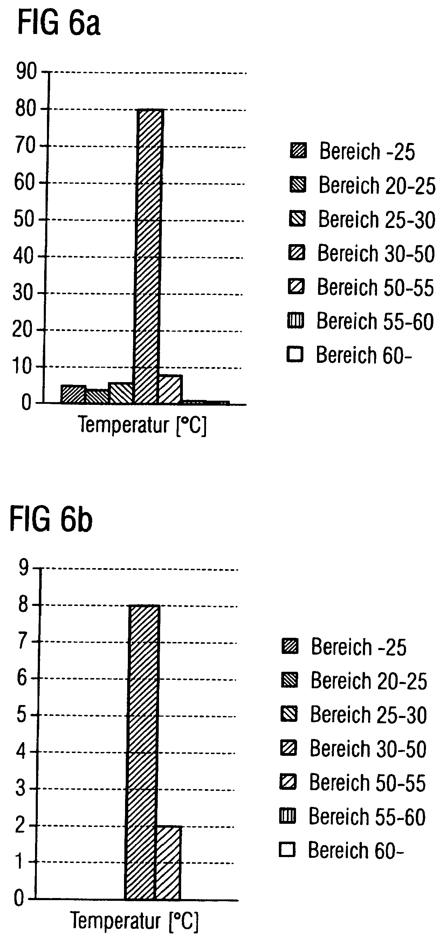

Fig. 6 zeigt Beispiele von unterschiedlichen Samplegrößen, um die Verteilung aufzubauen. Eine größere Samplegröße deckt normalerweise eine längere Zeitdauer, in der die Daten gesammelt werden, ab, falls angenommen wird, dass die Samplerate des Signals gleich ist. Folglich stellt eine geringere Samplegröße einen normalen Schnappschuss der momentanen Situation dar, wohingegen eine größere Samplegröße eine längere Zeitdauer darstellt.

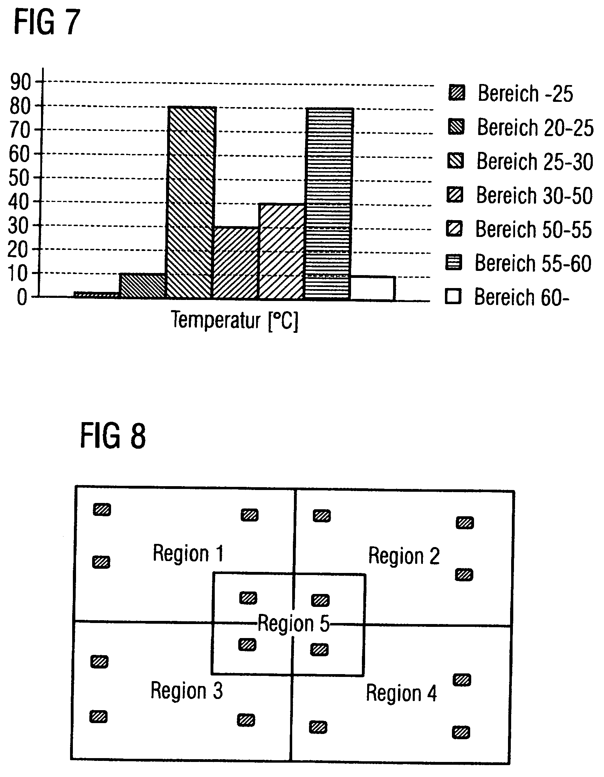

Fig. 7 (links) zeigt ein typisches Beispiel einer Wahrscheinlichkeitsverteilung mit einem großen Samplesatz und daher einer langen Zeitdauer, die wahrscheinlich eine Aktivität in dem Subsystem zeigt, das in der Temperatur um 55°C bis 60°C sich niederschlägt, und eine unbelegte Temperatur zwischen 25°C und 30°C. Das könnte als typisches Profil dienen und jede Art von Divergenz von diesem Profil ist ein Anzeichen für eine mögliche Fehlfunktion.

Zusammenfassend erlaubt die Temperaturdarstellung mittels diskreter Wahrscheinlichkeitsverteilungen, ein breites Spektrum von verschiedenen Systemtemperaturcharakteristiken abzudecken, um Fehler zu identifizieren und auf aufkommende Systemfehlfunktionen zu schließen. Es ist möglich, Temperaturprofile von Komponenten, größeren Subsystemen oder ein komplettes System zu überwachen. Unterschiedliche Samplinggrößen erlauben, dass Temperaturprofile über unterschiedliche Zeitperioden überwacht werden, und daher können systematisch sich schnell und langsam ändernde Temperaturprofile ergründet werden. Zusätzlich kann ein typisches Temperaturprofil über eine lange Zeitperiode eingelernt werden. Die Binning-Möglichkeit erlaubt, die Auflösungen in der Verteilung zu ändern und Regionen von besonderem Interesse mit höherer Auflösung zu modellieren.

Mit der Hilfe von Temperaturselbstwahrnehmung können Kurzzeit- sowie Langzeitcharakteristiken identifiziert werden, um Fehlertoleranzmechanismen auf dem Arbeitsablaufniveau zu erkennen.

2. Einzelereignisstörungsmessungen: Um systematisch Fehler zu identifizieren, die durch hochenergetische Partikel induziert werden - dies ist speziell für Satellitenanwendungen relevant, wird aber ebenso immer mehr für Systeme und Komponenten mit heutigen Halbleiterbauteilgrößen relevant - wird eine indirekte Methode durch ein unverknüpftes Netz von verteilten Speichern vorgeschlagen. Verschiedene Speicherkomponenten (DRAM, die für Einzelereignisstörungen sensitiv sein können) oder Speicherregionen innerhalb eines FPGA (kurz für anwendungsprogrammierbare Logik) werden mit einem speziellen Speichermuster abgelegt und durch einen einfachen Fehlerkorrekturcode geschützt, um Fehler zu erkennen. Die Speicher werden wiederholt überprüft, um Fehler in dem Speichermuster zu erkennen. Die abgelegten Speichermuster haben die Eigenschaft, dass diese mit festverdrahteten Schaltkreisen ohne Speicherelemente erzeugt werden können. Das Speichermuster wird im Speicher abgelegt und mit einer Checksumme versehen. Wenn nach einer gewissen Laufzeit erkannt wurde, dass die Checksumme nicht mehr stimmt, wird darauf geschlossen, dass ein oder mehrere Einzelereignisstörungen aufgetreten sind. Danach wird das Muster mit dem festverdrahteten Schaltkreis wieder erzeugt. Damit die Einheit zur Erzeugung des Musters nicht selber für Einzelereignisstörungen anfällig wird, besteht die Einheit nur aus einem festverdrahteten Schaltkreis.

Von bestimmten Fehlern wird dann auf ein Ereignis geschlossen. Um die Identifikation robust und für den Selbstausdrucksschritt hilfreich zu machen (mögliches Ändern des Systems, der Arbeitsabläufe usw.), eliminiert eine umsichtige Gestaltung der diskreten Wahrscheinlichkeitsverteilung und der Samplingstrategie zufällige Ereignisse, die einen Fehler auslösen.

Mittels vorsichtigem Organisieren und Platzieren der Speicherkomponenten/-regionen können fehlerhafte Regionen oder sichere Regionen zum Abarbeiten mit Bezug auf die Einzelereignisstörungen identifiziert werden. Diese Art von Information ist für den Selbstausdruckschritt und die Neuanordnung der Abläufe hilfreich.

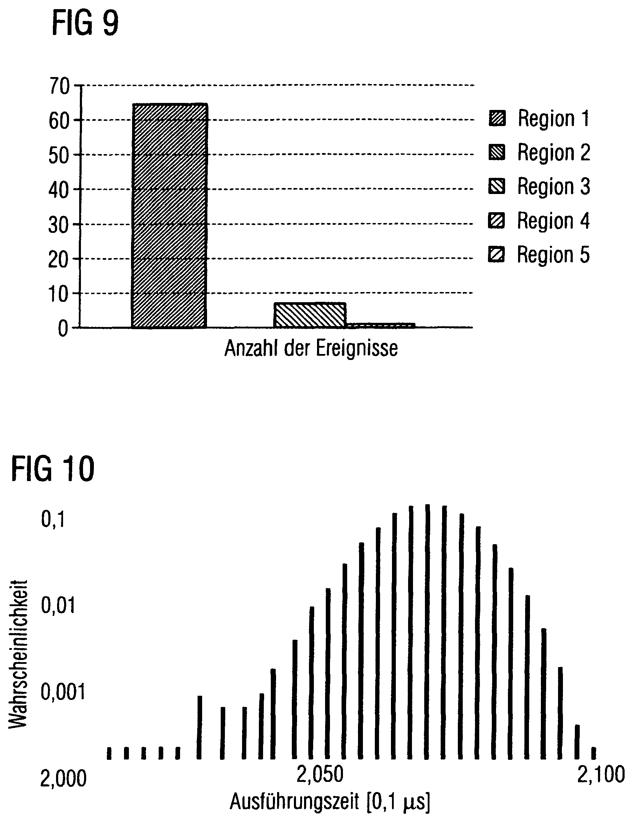

Eine das Ausführungsbeispiel darstellende Anordnung ist in Fig. 8 gezeigt, wobei die Punkte Speicherkomponenten oder Regionen mit abgelegten Mustern darstellen. Die definierten Regionen entsprechen der Gruppierung oder Bins der Verteilung, die in Fig. 9 dargestellt sind. Je nachdem wie die Regionen eingeteilt werden, ergibt sich eine andere Verteilung.

3. Spannungsmessungen: Messung und Überwachung von charakteristischen Spannungsverläufen im System.

4. Triebwerksgeschwindigkeit: Steht mit der Temperatur in Beziehung und kann als Überprüfung der Temperaturmessung und umgekehrt verwendet werden.

In der zweiten Kategorie - Systemstatistiken, die während des Arbeitsablaufs gesammelt werden - werden die folgenden Merkmale als Beispiele für die Arbeitsgröße diskutiert:

1. Thread-Laufzeitmessungen: Die Ausführungszeit eines Threads auf einer spezifischen Plattform kann im Voraus durch eine untere Grenze (beste Ausführungszeit) und eine obere Grenze (schlechteste Ausführungszeit) und die Wahrscheinlichkeiten der Ausführungszeiten zwischen diesen beiden Grenzen bestimmt werden. Der Begriff Thread folgt in diesem Zusammenhang der Standarddefinition eines Software-Threads aus der Informatik. Die untere und die obere Grenze kann analytisch und mit Sicherheit bestimmt werden. Werte zwischen diesen zwei extremen Fällen können durch Simulationsabläufe oder während der Laufzeit bestimmt werden. Ein solcher Simulationsablauf ist beispielhaft in Fig. 10 gezeigt, wobei eine Ausführungszeitverteilung für einen Steueralgorithmus eines Satelliten gezeigt ist.

Als ein erster Ansatz wird die Information von extremen Fällen verwendet und die Ausführungszeit über die gesamte Zeitperiode wird gesammelt, um eine Verteilung aufzubauen. Während dieses Prozesses werden jede Ausreißer, die nicht in den Bereich zwischen der unteren und oberen Grenze liegen, verworfen und stellen einen Fehler des Threads dar.

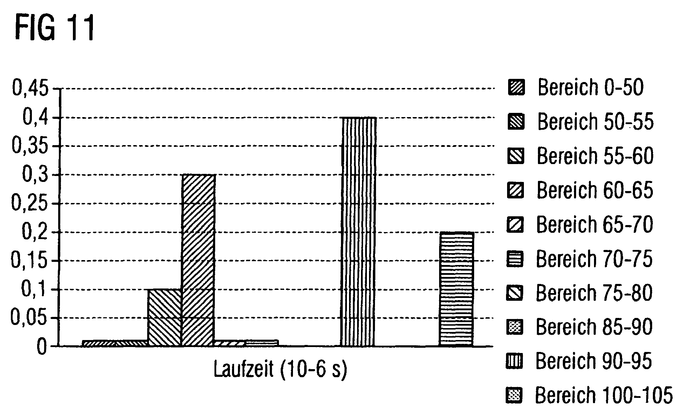

Sogar ohne die Verwendung der unteren und oberen Grenzwerte kann systematisch eine Ausführungszeitverteilung mit Bezug auf den Thread aufgebaut werden. Dieser Prozess der Thread-Ausführzeitmessung kann zu Verteilungen führen, wie sie in Fig. 11 gezeigt sind, bei der drei Modusverteilungen gezeigt sind, die typisch für die Arbeitsabläufe mit drei Programmzweigen und großen Unterschieden der Berechnung in jedem der Zweige sind. Die einzelnen Peaks der Verteilung entsprechen dabei einem Modus der Ausführungszeit eines Threads.

2. Thread Stack-Verwendungsmessungen: Für die Stack-Verwendung eines Threads kann auch eine untere und eine obere Grenze analytisch bestimmt werden. Wiederum können diese beiden Grenzen dazu dienen, Ausreißer während der Sammlung der Stack-Verwendungsdaten während des Arbeitsablaufs zu identifizieren, um die Wahrscheinlichkeitsverteilung aufzubauen, die einen typischen Thread charakterisiert. Ähnlich zu Fig. 11 kann die Stack-Verwendung eines Threads diese Art von Verteilung aufweisen. Abhängig von dem Thread kann die charakteristische Verteilung mit einer oder mehr Moden beobachtet werden.

3. Thread-Speicherverwendungsmessungen: Ebenso für die spezifische Speicherverwendung des Threads kann eine typische Verteilung aufgebaut werden. Im Voraus kann eine detaillierte Analyse eine Worst-Case Wert der Speicherverwendung des Threads bereitgestellt werden. Ebenso kann die Ausführungszeit und die Stack-Verwendung sowie Wahrscheinlichkeitsverteilungen mit einem oder mehr Moden charakteristisch sein abhängig von den Berechnungen und der Speicherverwendung des Threads.

4. Speicherprofil: Sogar für das komplette Speichersystem kann eine charakteristische Wahrscheinlichkeitsverteilung aufgebaut werden, die einem normalen oder typischen Subsystemstatus entspricht. Manchmal ist es mit Hilfe einer analytischen Analyse möglich, die Worst-Case Speicherverwendung als eine obere Grenze zu bestimmen.

5. Netzwerksaktivitätsprofil: Mehrere geeignete Merkmale der Netzwerkstruktur können verwendet werden. In diesem Fall wird auf ein Multistage Interconnection Network (MIN) fokussiert, die blockierend oder nicht blockierend sein können und die als direkte Verbindungen oder paketbasierend realisiert sein können.

In der dritten Kategorie - A-priori-System und Umweltwissen - können diskrete Wahrscheinlichkeitsverteilungen für all die zuvor genannten Merkmale, einen typischen oder normalen Status des Systems zu einem Zeitpunkt darstellen, an spezifischen Prozessschritten oder im Gesamten bereitgestellt werden. Mittels der gewählten Darstellung (diskrete Wahrscheinlichkeitsfunktionen) kann ein flexibles und umfangreiches Darstellungswerkzeug geschaffen werden.

Stufe B

Die unterschiedlichen diskreten Wahrscheinlichkeitsverteilungen, die durch verschiedene Sensorsignale oder Systemstatistiken in Stufe A gebildet wurden, sind schon ein breiter fokussierter Status und eine computerlenkbare Version einer Systemselbstwahrnehmung. Weitere Verarbeitung und Konzentrierung dieser Information in Richtung eines Merkmalsvektors ist ein wesentlicher Schritt, um Eingabedaten (Merkmalsvektor) für Stufe C zu generieren, bei dem der Selbstausdruck stattfindet, die schließlich die Fehlertoleranzmethode in die Praxis umsetzen. In Stufe B wird diese Weiterverarbeitung und Konzentrierung durchgeführt. Abhängig von dem Algorithmus in Stufe C und von den Weiterverarbeitungs- /Konzentrierungsschritten in Stufe B können der Merkmalsvektor/die Merkmalsvektoren unterschiedliche Längen, Strukturen und Bedeutungen haben.

Informationsweiterverarbeitung/Konzentrierungsansätze

Aufgrund der Darstellung der Systeminformationen mittels diskreter Wahrscheinlichkeitsverteilungen, die die zuvor beschriebenen Vorteile haben, können verschiedene statistische Werkzeuge, Methoden und Maße verwendet werden, um die Verteilungen weiter zu bearbeiten und die Werte für den Merkmalsvektor (die Merkmalsvektoren) zu bilden.

Die vorgeschlagenen Ansätze werden im Folgenden beschrieben:

Das Kullback-Leibler-Divergenzmaß (relative Entropie)

Das Vergleichen von A-priori-Wissen über bestimmte Systemmerkmale (die durch eine vordefinierte und gegebene diskrete Wahrscheinlichkeitsverteilung dargestellt wird), die den normalen oder regulären Zustand des Systemmerkmals mit den gemessenen Merkmalsdaten und den in Stufe A aufgebauten diskreten Wahrscheinlichkeitsverteilungen definieren, ist ein wirksamer Ansatz, um Abweichungen dieses Systemmerkmals von dem normalen Status und Verhalten zu erkennen, um damit auf unnormale Systemzustände und Verhalten, die final in einen Fehler kumulieren, zu schließen.

Die Kullback-Leibler-Divergenz ist ein Maß, um diese Wahrscheinlichkeitsverteilungsvergleiche mathematisch solide durchzuführen.

Für diskrete Werte der Wahrscheinlichkeitsfunktionen P und Q ist die Kullback-Leibler-Divergenz (relative Entropie) gegeben durch:

$$D(P\|Q) = KL(P,Q) = \sum_{x \in X} P(x) \cdot \log \frac{P(x)}{Q(x)}$$

Der Vollständigkeit halber wird für kontinuierliche Werte, die durch eine Dichtefunktion dargestellt sind, das Integral verwendet:

$$D(P\|Q) = \int_{-\infty}^{\infty} p(x) \cdot \log \frac{p(x)}{q(x)} dx$$

Die Kullback-Leibler-Divergenz (KL) besitzt einige Eigenschaften einer Metrik und da sie nur einige Metrik-Eigenschaften hat, wird sie KL-Divergenz anstelle von KL-Metrik im Raum der Wahrscheinlichkeitsfunktion genannt. Im Detail ist sie nicht negativ, das heißt KL (P, Q) $\geq$ 0, mit Gleichheit falls Q = P, sie ist jedoch nicht symmetrisch und erfüllt nicht die Dreiecksungleichung.

Die KL-Divergenz ist leistungsstark genug, obwohl sie nicht eine Metrik ist, als ein Vergleichsmaß, um nützliche Informationen im Raum der Wahrscheinlichkeitsfunktionen bereitzustellen, und daher als statistisches Modell (A-priori oder aufgebaut während der Laufzeit) zu dem Zwecke des Aufbauens von robusten Selbstwahrnehmungssystemmerkmalen.

Offensichtlich ist die KL-Divergenz nur eines von mehreren statistischen Maßen und Werkzeugen, um diskrete Wahrscheinlichkeitsfunktionen zu verwerten und robuste Informationen bereitzustellen, um systematisch Merkmalsvektoren aufzubauen, die diese Systemselbstwahrnehmung repräsentieren.

CHI-Quadrattest

Anderson-Darl ing/Kolmogorov-Sm irnov

Gegenseitige Information (Nicht-lineare Abhängigkeit = 0, zwei Variable sind strikt unabhängig und nicht nur unkorreliert. Selbstinformationsmerkmal. Hinweis auf Fehler.)

Stufe C

In Stufe C wird ein grafisches Modell verwendet, das die Komponenten und/oder Teilsysteme und deren korrespondierende Darstellung und Systemverwendung darstellt. Die Kanten der Graphen repräsentieren einfache 0-1-Wahrscheinlichkeiten. Bestimmte Aktionen können bei bestimmten Wahrscheinlichkeiten oder während der Laufzeit abgeleiteten Wahrscheinlichkeiten stattfinden.

Die entsprechenden Regeln können durch mathematische Terme verfasst werden und für das spätere Endergebnis verknüpft werden.

Eine Ausführungsform wird im Folgenden nochmals alternativ dargestellt.

Idee (1)

- Selbstwahrnehmung ist nicht eine einfache "Wert"-Darstellung, sie lebt vielmehr von A-priori-Wissen (und Lernen).
- Selbstausdruck ist nicht immer deterministisch (grafische Modelle, Wahrscheinlichkeiten)
- ist selbst robust mit Bezug auf Fehler

    → aus Statistiken und statistischen Prozessen gebaut.

Idee (2)

1. Sammeln von Informationen
2. Untersuchen, Vergleichen von Wahrscheinlichkeitsverteilungen (gemessen gegen A-priori-Wissen)
3. Grafische Modelle (Threads, Network, Architektur, Mapping, Komponenten, Systeme)

   - Werkzeug, um Entscheidungen zu führen
   - Entscheidung und Ereignis.

Darstellung - Diskrete Wahrscheinlichkeitsverteilungen

- Robustheit
- Anpassbarkeit der Darstellung und variierende Auflösung

    - im Hinblick zur Zeit - unterschiedliche Zeitdauern für die Datensammlung und daher der Menge der Daten, die in die Darstellung eingeht
    - Im Detail - Mapping der Wertebereiche auf diskrete Werte (Binning) einschließlich nicht homogener Wertebereiche
    - während der Laufzeit - Ändern der zuvor genannten Merkmale während der Laufzeit

- mathematisch solide

    - systematisch mathematisch basierte Darstellung

- Werkzeug geeignet für weitere Verarbeitung und Analyse

- effizient mittels Computer bearbeitbar
- gut definierte Schnittstellen

Selbstwahrnehmung

- erste Kategorie - physikalische Werte des Systems, gemessen durch verschiedene Sensoren

    - Temperaturmessungen
    - Triebwerksgeschwindigkeiten, Spannungsmessungen

- zweite Kategorie - systematische Statistik, die während der Laufzeit gesammelt wird

    - Thread-Laufzeitmessungen
    - Thread-Stack-Verwendungsmessungen
    - Thread-Speicherverwendungsmessungen
    - Speicherprofile
    - Netzwerkstatus/Aktivitätsprofil

- dritte Kategorie - A-priori-System und Umweltkenntnis

    - Offline-bestimmt

    - online lernend

Szenario (1)

- Systemeinstellung

    - ein Knoten mit drei unterschiedlichen Threads

        - ein Thread kritisch", doppelt redundant und Vergleich
        - zwei Threads "optional"

    - Eigenschaften: Zweimal Temperatur, Thread-Ausführungszeit, A-priori-Wissen
    - Wahrscheinlichkeitsverteilungsmaß gegen A-priori-Wissen
    - Untersuchung gegen A-priori-Wissen

- Selbstwahrnehmung

    - Merkmalvektoren

        - Temperatur, zwei Werte von Wahrscheinlichkeitsverteilungsmaß
        - Ausführungszeit, vier Werte von Wahrscheinlichkeitsverteilungsmaß
        - Vergleichsergebnis, Gegenmaßnahmen zu Fehlern

Szenario (2)

- Normaler Betrieb

    - Temperaturwahrscheinlichkeitsverteilungswerte, Ausführungszeit- Untersuchung, Vergleich OK

→ Kein Selbstauslösungsereignis und TLFD (Thread Niveau Fehlertoleranz)

- Temperaturbetrieb

  - Ausführungszeituntersuchungen, Vergleich OK, Temperaturwahrscheinlichkeitsverteilungswerte verdächtig

    → Selbstauslösung und TLFT → Aussetzen von optionalen Threads, um kritischen Thread zu sichern

- Vergleich des fehlerhaften Betriebs

  - Ausführungszeituntersuchungen, Vergleich fehlgeschlagen, Temperaturwahrscheinlichkeitsverteilung OK

    → Selbstauslösung und TLFT

      → 1) Bereitstellen des alten Werts, 2) Vorbereiten einer dritten Version des Threads
      → 1) Bereitstellen des zweiten Werts, 2) Starten des dritten Threads, 3) Aussetzen der optionalen Threads

Szenario (3)

- Threads stürzen ab/hängen sich auf/zeigen ungewolltes Verhalten

  - Temperaturwahrscheinlichkeitsverteilungswerte, Ausführungszeituntersuchungen fehlgeschlagen, Vergleich fehlgeschlagen

    → Selbstausauslösungsereignis und TLFT → lösche Thread und starte neu

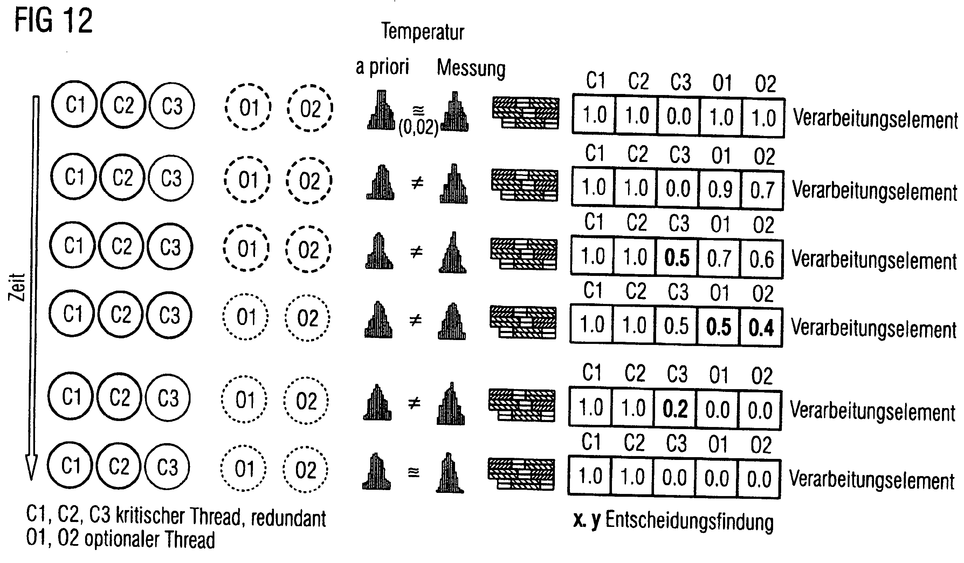

Szenario (4) ist in Fig. 12 schematisch dargestellt. Der Temperaturbetrieb wird anhand drei kritischer Threads C1, C2 und C3 und zweier optionaler Threads O1 und O2 überwacht. Die Verteilungen der einzelnen Threads werden mit a-priori-Verteilungen verglichen. Die Abweichungen der einzelnen Threads sind rechts dargestellt. Auf Basis der ermittelten Abweichung kann automatisch die Entscheidung getroffen werden, die optionalen Threads auszusetzen, um die kritischen Threads zu sichern.

- Temperaturbetrieb

  - Ausführungszeituntersuchung, Vergleich OK, Temperaturwahrscheinlichkeitsverteilungswerte verdächtig

    → Selbstausdruck und TLFT → setze optionale Threads aus, um kritischen Thread zu sichern

Selbstwahrnehmung

- Physikalische Werte des Systems, die durch verschiedene Sensoren gemessen werden, einschließlich beispielsweise Temperatur, Spannung, Betriebsgeschwindigkeit, netzwerkbezogene Merkmale usw.
- Statistiken des Systems, die während der Laufzeit gesammelt und berechnet werden, einschließlich Informationen über den Thread, Bearbeitungszeit, Speicherverwendung, Netzwerkverkehr, usw.
- Vorgegebene Größen des Systems und der Betriebsumgebung; a-priori-Wissen

**Bezugszeichenliste**

10    Flugkörper
12    Flugzeug
14    Anordnung

16 Detektionsvorrichtung
17 Messeinrichtung
18 Sensor
20 Analyseeinrichtung
22 Warneinrichtung
24 Steuereinrichtung
26 Bauteil
28 Überwachungseinrichtung

A Stufe
B Stufe
C Stufe

**Patentansprüche**

1. Verfahren zum Detektieren eines Fehlers in einer Anordnung (14), insbesondere einer Anordnung (14) eines Flugkörpers (10), wobei die Anordnung (14) durch wenigstens einen Parameter charakterisierbar ist und wobei das Verfahren die Schritte umfasst:

   a) Erfassen mehrerer Werte des Parameters an mehreren Zeitpunkten und/oder an mehreren Messpunkten,
   b) Einteilen der Werte des Parameters in mehrere Gruppen, **gekennzeichnet durch** die Schritte:
   c) Bestimmen der Anzahl der Werte in jeder Gruppe,
   d) Bilden einer Statistik mit der Anzahl der Werte der Gruppen, wobei die Anzahl der Werte über die Gruppen dargestellt wird,
   e) Vergleichen der gebildeten Statistik mit einer vorgegebenen Statistik mittels statistischer Methoden, und
   f) Auslösen eines Fehlersignals, falls das Maß des statistischen Vergleichs einen vorgegebnen Wert übersteigt.

2. Verfahren nach Anspruch 1, **dadurch gekennzeichnet, dass** der Parameter eine physikalische Größe ist, die vorzugsweise mittels einer Messung erfasst wird, und/oder dass der Parameter eine Arbeitsgröße einer Steuereinrichtung der Anordnung ist, wobei vorzugsweise die Arbeitsgröße durch Messung der Steuereinrichtung erfasst wird.

3. Verfahren nach Anspruch 2, **dadurch gekennzeichnet, dass** der Parameter eine Temperatur in und/oder an der Anordnung (14) und/oder eine Geschwindigkeit, insbesondere eines Triebwerks des Flugkörpers (10), und/oder eine Spannung in und/oder an der Anordnung (14) umfasst.

4. Verfahren nach Anspruch 2, **dadurch gekennzeichnet, dass** die Arbeitsgröße die Dauer eines Prozesses der Steuereinrichtung (24) und/oder der von der Steuereinrichtung (24) verwendete Speicher und/oder der in der Steuereinrichtung (24) ablaufende Datenverkehr umfasst.

5. Verfahren nach einem der voranstehenden Ansprüche, **dadurch gekennzeichnet, dass** das Kriterium für die Einteilung in eine Gruppe wenigstens einer Gruppe sich von dem Kriterium einer anderen Gruppe unterscheidet, wobei weiter vorzugsweise das Kriterium für die Einteilung wenigstens einer Gruppe durch den Wertebereich bestimmt wird, der mit einem Fehler der Anordnung (14) in Zusammenhang steht.

6. Detektionsvorrichtung zum Detektieren eines Fehlers in einer Anordnung (14), insbesondere einer Anordnung (14) eines Flugkörpers (10), wobei die Anordnung (14) durch wenigstens einen Parameter charakterisierbar ist und wobei die Detektionsvorrichtung (16) umfasst
   eine Messeinrichtung (17), die geeignet ist, mehrere Werte des Parameters der Anordnung (14) an mehreren Zeitpunkten und/oder an mehreren Messpunkten zu erfassen,
   eine Analyseeinrichtung (20), welche die Werte des Parameters in mehrere Gruppen einteilt,
   **dadurch gekennzeichnet, dass** die Analyseeinrichtung (20) die Anzahl der Werte in jeder Gruppe bestimmt, und aus den erfassten Werten eine Statistik bildet, wobei die Anzahl der Werte über die Gruppen dargestellt ist,
   eine Warneinrichtung (22), welche die gebildete Statistik mit einer vorgegebenen Statistik mittels statistischer Methoden vergleicht und die ein Signal auslöst, falls das Maß des statistischen Vergleichs einen vorgegebnen Wert übersteigt..

7. Detektionsvorrichtung nach Anspruch 6, **dadurch gekennzeichnet, dass** der Parameter eine physikalische Größe ist, die vorzugsweise mittels wenigstens einem Sensor (18) der Messeinrichtung (17) erfasst wird, und/oder dass der Parameter eine Arbeitsgröße einer Steuereinrichtung (24) der Anordnung (14)ist, wobei vorzugsweise die Arbeitsgröße durch eine Überwachungseinrichtung (28) erfasst wird.

8. Detektionsvorrichtung nach Anspruch 7, **dadurch gekennzeichnet, dass** der Sensor (18) geeignet ist, eine Temperatur in und/oder an der Anordnung (14) und/oder eine Geschwindigkeit, insbesondere eines Triebwerks des Flugkörpers (10), und/oder eine Spannung in und/oder an der Anordnung (14) zu messen.

9. Detektionsvorrichtung nach Anspruch 7, **dadurch gekennzeichnet, dass** die Messeinrichtung (17) geeignet ist, die Dauer eines Prozesses der Steuereinrichtung (24) und/oder der von der Steuereinrichtung (24) verwendete Speicher und/oder der in der Steuereinrichtung (24) ablaufende Datenverkehr zu erfassen.

10. Detektionsvorrichtung nach einem der Ansprüche 6 bis 9, **dadurch gekennzeichnet, dass** das Kriterium für die Einteilung in eine Gruppe wenigstens einer Gruppe sich von dem Kriterium einer anderen Gruppe unterscheidet, wobei weiter vorzugsweise das Kriterium für die Einteilung wenigstens einer Gruppe durch den Wertebereich bestimmt wird, der mit einem Fehler der Anordnung (14) in Zusammenhang steht.

11. Flugkörper, umfassend
eine Anordnung (14) und
eine Detektionsvorrichtung (16) zum Detektieren eines Fehlers in einer Anordnung (14) nach einem der Ansprüche 6 bis 10.

**Claims**

1. A method for detecting an error in an assembly (14), in particular an assembly (14) of a flying object (10), wherein the assembly (14) can be **characterised by** at least one parameter, and wherein the method comprises the steps:

   a) acquiring several values of the parameter at several points in time and/or at several measuring points,
   b) grouping the values of the parameter in several groups, **characterised by** the steps:
   c) determining the number of values in each group,
   d) generating a statistic with the number of values of the groups, with the number of values being represented throughout the groups,
   e) comparing the generated statistic with a predefined statistic by means of statistical methods, and
   f) triggering an error signal if the degree of the statistical comparison exceeds a predetermined value.

2. The method according to claim 1, **characterised in that** the parameter is a physical parameter that is preferably acquired by a measurement, and/or that the parameter is an operating quantity of a control device of the assembly, the operating quantity preferably being acquired by measurement of the control device.

3. The method according to claim 2, **characterised in that** the parameter comprises a temperature in and/or on the assembly (14) and/or a speed, in particular of an engine of the flying object (10), and/or a voltage in and/or on the assembly (14).

4. The method according to claim 2, **characterised in that** the operating quantity comprises the duration of a process of the control device (24) and/or of the memories used by the control device (24) and/or of the data traffic taking place in the control device (24).

5. The method according to any one of the preceding claims, **characterised in that** the criterion for grouping into a group of at least one group is different from the criterion of another group, wherein the criterion for grouping of at least one group is further preferably determined by the range of values related to an error of the assembly (14).

6. A detecting device for detecting an error in an assembly (14), in particular an assembly (14) of a flying object (10), wherein the assembly (14) can be **characterised by** at least one parameter, and wherein the detecting device (16) comprises
a measuring device (17) suitable for acquiring several values of the parameter of the assembly (14) at several points in time and/or at several measuring points,
an analysis device (20) grouping the values of the parameter in several groups,

**characterised in that** the analysis device (20) determines the number of the values in each group and generates a statistic from the acquired values, with the number of the values being represented throughout the groups, a warning device (22) which compares the generated statistic with a predefined statistic by means of statistical methods, and which triggers a signal if the degree of the statistical comparison exceeds a predetermined value.

7. The detecting device according to claim 6, **characterised in that** the parameter is a physical parameter that is preferably acquired by means of at least one sensor (18) of the measuring device (17), and/or that the parameter is an operating quantity of a control device (24) of the assembly (14), the operating quantity preferably being acquired by means of a monitoring device (28).

8. The detecting device according to claim 7, **characterised in that** the sensor (18) is suitable for measuring a temperature in and/or on the assembly (14) and/or a speed, in particular of an engine of the flying object (10), and/or a voltage in and/or on the assembly (14).

9. The detecting device according to claim 7, **characterised in that** the measuring device (17) is suitable for acquiring the duration of a process of the control device (24) and/or of the memories used by the control device (24) and/or of the data traffic taking place in the control device (24).

10. The detecting device according to any one of the claims 6 to 9, **characterised in that** the criterion for grouping into a group of at least one group is different from the criterion of another group, wherein the criterion for grouping of at least one group is further preferably determined by the range of values related to an error of the assembly (14).

11. A flying object, comprising
an assembly (14), and
a detecting device (16) for detecting an error in an assembly (14) according to any one of the claims 6 to 10.

**Revendications**

1. Procédé pour détecter une erreur dans un agencement (14), en particulier un agencement (14) d'un engin volant (10), dans lequel l'agencement (14) est susceptible d'être **caractérisé par** au moins un paramètre, et dans lequel le procédé inclut les étapes consistant à :

   a) détecter plusieurs valeurs du paramètre à plusieurs instants et/ou à plusieurs points de mesure,
   b) organiser les valeurs du paramètre en plusieurs groupes,

   **caractérisé par** les étapes consistant à :

   c) déterminer le nombre des valeurs dans chaque groupe,
   d) former une statistique avec le nombre des valeurs des groupes, de sorte que le nombre des valeurs est représenté sur les groupes,
   e) comparer la statistique formée avec une statistique prédéterminée, au moyen de méthodes statistiques, et
   f) déclencher un signal d'erreur, dans le cas où la valeur de la comparaison statistique dépasse une valeur prédéterminée.

2. Procédé selon la revendication 1, **caractérisé en ce que** le paramètre est une grandeur physique, qui est détectée de préférence au moyen d'une mesure, et/ou **en ce que** le paramètre est une grandeur de travail d'un dispositif de commande de l'agencement, dans lequel de préférence la grandeur de travail est déterminée par mesure du dispositif de commande.

3. Procédé selon la revendication 2, **caractérisé en ce que** le paramètre inclut une température dans et sur l'agencement (14) et/ou une vitesse, en particulier d'un moteur de l'engin volant (10) et/ou une tension dans et/ou sur cet agencement (14).

4. Procédé selon la revendication 2, **caractérisé en ce que** la grandeur de travail inclut la durée d'un processus du dispositif de commande (24) et/ou la mémoire utilisée par le dispositif de commande (24), et/ou le flux de données qui se déroule dans le dispositif de commande (24).

**5.** Procédé selon l'une des revendications précédentes, **caractérisé en ce que** le critère pour l'organisation dans un groupe diffère au moins dans un groupe par rapport au critère d'un autre groupe, et le critère pour l'organisation d'au moins un groupe est de préférence déterminé par la plage de valeurs qui est dans liaison avec une erreur de l'agencement (14).

**6.** Dispositif de détection pour détecter une erreur dans un agencement (14), en particulier un agencement (14) d'un engin volant (10), dans lequel l'agencement (14) est susceptible d'être **caractérisé par** au moins un paramètre, et le dispositif de détection (16) inclut
un dispositif de mesure (17) qui convient pour détecter plusieurs valeurs du paramètre de l'agencement (14) à plusieurs instants et/ou à plusieurs points de mesure,
un dispositif d'analyse (20) qui organise les valeurs du paramètre en plusieurs groupes,
**caractérisé en ce que** le dispositif d'analyse (20) détermine le nombre des valeurs dans chaque groupe, et forme à partir des valeurs saisies une statistique, et le nombre des valeurs est illustré sur les groupes,
un dispositif d'avertissement (22) qui compare la statistique formée avec une statistique prédéterminée, au moyen de méthodes statistiques, et qui déclenche un signal dans le cas où la mesure de la comparaison statistique dépasse une valeur prédéterminée.

**7.** Dispositif de détection selon la revendication 6, **caractérisé en ce que** le paramètre est une grandeur physique qui est de préférence détectée au moyen d'au moins un détecteur (18) du dispositif de mesure (17), et/ou **en ce que** le paramètre est une valeur de travail d'un dispositif de commande (24) de l'agencement (14), et de préférence la valeur de travail est détectée par un dispositif de surveillance (28).

**8.** Dispositif de détection selon la revendication 7, **caractérisé en ce que** le détecteur (16) convient pour mesurer une température dans et/ou sur l'agencement (14) et/ou une vitesse, en particulier d'un moteur de propulsion de l'engin volant (10), et/ou d'une tension dans ou sur l'agencement (14).

**9.** Dispositif de détection selon la revendication 7, **caractérisé en ce que** le dispositif de mesure (17) est approprié pour détecter la durée d'un processus du dispositif de commande (24) et/ou la mémoire utilisée par le dispositif de commande (24), et/ou le flux de données qui se déroule dans le dispositif de commande (24).

**10.** Dispositif de détection selon l'une des revendications 6 à 9, **caractérisé en ce que** le critère pour l'organisation dans un groupe diffère dans au moins un groupe du critère d'un autre groupe, et de préférence le critère pour l'organisation d'au moins un groupe est en outre déterminé par la plage de valeurs qui est associée à une erreur de l'agencement (14).

**11.** Engin volant qui inclut
un agencement (14), et
un dispositif de détection (16) pour détecter une erreur dans un agencement (14) selon l'une des revendications 6 à 10.

Fig. 1

Fig. 2

Fig. 3

# FIG 4

## FIG 5a

Bereich -25
Bereich 20-25
Bereich 25-30
Bereich 30-50
Bereich 50-55
Bereich 55-60
Bereich 60-

## FIG 5b

Bereich -25
Bereich 20-25
Bereich 25-50
Bereich 50-55
Bereich 55-60
Bereich 60-

## FIG 6a

Bereich -25
Bereich 20-25
Bereich 25-30
Bereich 30-50
Bereich 50-55
Bereich 55-60
Bereich 60-

Temperatur [°C]

## FIG 6b

Bereich -25
Bereich 20-25
Bereich 25-30
Bereich 30-50
Bereich 50-55
Bereich 55-60
Bereich 60-

Temperatur [°C]

## FIG 7

## FIG 8

## FIG 9

| | |
|---|---|
| ▨ | Region 1 |
| ▧ | Region 2 |
| ▧ | Region 3 |
| ▨ | Region 4 |
| ▨ | Region 5 |

Anzahl der Ereignisse

## FIG 10

Wahrscheinlichkeit

Ausführungszeit [0,1 μs]

## FIG 11

Bereich 0-50
Bereich 50-55
Bereich 55-60
Bereich 60-65
Bereich 65-70
Bereich 70-75
Bereich 75-80
Bereich 85-90
Bereich 90-95
Bereich 100-105

Laufzeit (10-6 s)

EP 2 857 916 B1

**FIG 12**

Zeit

Temperatur — a priori — Messung

| | C1 | C2 | C3 | 01 | 02 | |
|---|---|---|---|---|---|---|
| | 1.0 | 1.0 | 0.0 | 1.0 | 1.0 | Verarbeitungselement |
| | 1.0 | 1.0 | 0.0 | 0.9 | 0.7 | Verarbeitungselement |
| | 1.0 | 1.0 | **0.5** | 0.7 | 0.6 | Verarbeitungselement |
| | 1.0 | 1.0 | 0.5 | **0.5** | **0.4** | Verarbeitungselement |
| | 1.0 | 1.0 | **0.2** | 0.0 | 0.0 | Verarbeitungselement |
| | 1.0 | 1.0 | 0.0 | 0.0 | 0.0 | Verarbeitungselement |

$\approx (0,02)$

C1, C2, C3 kritischer Thread, redundant
01, 02 optionaler Thread

**x, y** Entscheidungsfindung

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090229272 A1
- AT 202384 B
- DE 3633402 A1
- US 6408259 B1
- US 20130132000 A1
- DE 102011108678 A1
- DE 102009040386 A1